(19) Europäisches Patentamt
European Patent Office
Office européen des brevets

(11) **EP 3 831 870 B1**

(12) **EUROPEAN PATENT SPECIFICATION**

(45) Date of publication and mention
of the grant of the patent:
**31.12.2025 Bulletin 2026/01**

(21) Application number: **19840205.9**

(22) Date of filing: **25.07.2019**

(51) International Patent Classification (IPC):
*C08J 9/04* (2006.01)      *C08L 71/03* (2006.01)
*G10K 11/162* (2006.01)    *C08G 65/24* (2006.01)
*C08J 9/00* (2006.01)      *C08J 9/06* (2006.01)
*C08J 9/10* (2006.01)      *C08K 3/04* (2006.01)
*C08K 5/12* (2006.01)      *C08K 3/34* (2006.01)

(52) Cooperative Patent Classification (CPC):
(C-Sets available)
**C08G 65/24; C08J 9/0033; C08J 9/06; C08J 9/107;
G10K 11/162;** C08J 2201/026; C08J 2371/03;
C08K 3/04; C08K 3/346; C08K 5/12          (Cont.)

(86) International application number:
**PCT/JP2019/029270**

(87) International publication number:
**WO 2020/022451 (30.01.2020 Gazette 2020/05)**

(54) **SOUND-ABSORBING MATERIAL COMPOSITION**

SCHALLDÄMMZUSAMMENSETZUNG

COMPOSITION DE MATÉRIAU D'ABSORPTION ACOUSTIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.07.2018 JP 2018141253**

(43) Date of publication of application:
**09.06.2021 Bulletin 2021/23**

(73) Proprietor: **Osaka Soda Co., Ltd.
Osaka-shi, Osaka 530-0001 (JP)**

(72) Inventors:
• **KITAGAWA, Motoki
Osaka-shi, Osaka 550-0011 (JP)**
• **OZAKI, Taro
Osaka-shi, Osaka 550-0011 (JP)**
• **HARADA, Tomonori
Osaka-shi, Osaka 550-0011 (JP)**

(74) Representative: **Müller-Boré & Partner
Patentanwälte PartG mbB
Friedenheimer Brücke 21
80639 München (DE)**

(56) References cited:
JP-A- 2003 140 427      JP-A- 2004 306 660
JP-A- 2004 306 660      JP-A- 2005 187 522
JP-A- 2010 002 617      JP-A- 2011 122 021
JP-A- 2015 197 466      JP-A- 2018 070 332
JP-A- 2018 070 332      US-A- 3 691 113
US-A- 6 096 395

(52) Cooperative Patent Classification (CPC): (Cont.)

C-Sets
C08K 3/04, C08L 71/03;
C08K 3/346, C08L 71/03;
C08K 5/12, C08L 71/03

**Description**

TECHNICAL FIELD

The present invention relates to the use of a composition for a sound-absorbing material of an electric automobile, comprising an epichlorohydrin-based polymer, a foaming agent, and a crosslinking agent as essential components; and to the use of a foamed material made from the composition, which have good sound-absorbing ability.

BACKGROUND ART

In the fields of buildings, aircrafts, automobiles, railroad vehicles, computers, and the like, materials using EPDM, NBR, CR, or the like are generally used for the purpose of soundproofing and sound absorption (Patent Document 1). In particular, due to electrification of automobiles, a noise in an automobile has changed from an engine noise to a motor noise, and the frequency range of the noise has also shifted from several hundred Hz to several thousand Hz, that is, toward a high frequency side. Further, Patent Document 2 discloses a composition of a foam rubber for a sound-absorbing material, wherein the foamed rubber composition is obtained by adding various additives including at least a foaming agent to an unvulcanized rubber base material. Patent Document 3 discloses a paper feed roll, which comprises a shaft body; and an elastic layer formed on an outer periphery of the shaft body, the elastic layer being a foam containing hydrin rubber, the elastic layer having a hollow portion formed by foam cells connected to each other on the radially inner side. Patent Document 4 discloses a charging roll comprising a center shaft; a foam layer formed on an outer circumferential surface of said center shaft, said foam layer consisting of an electrically conductive foam body or a foam body a part of which is made electrically conductive; an electrically conductive elastic layer formed on an outer surface of said foam layer, said electrically conductive elastic layer having a specific thickness, and comprising one of an electrically conductive rubber composition and an electrically conductive thermoplastic elastomer; a resistance adjusting layer formed by coating on an outer surface of said electrically conductive elastic layer; and a protective layer formed by coating on an outer surface of said resistance adjusting layer. Patent Document 5 discloses an expanded cross-linked poly(epihalohydrin) of substantially uniform closed-cell structure, having a specific density and a percentage compressibility of from about 20 percent to about 97 percent, said poly(epihalohydrin) having a weight average molecular weight of at least about 40,000.

PRIOR ART DOCUMENT

PATENT DOCUMENT

Patent Document 1: JP H01 139634 A
Patent Document 2: JP 2004 306660 A
Patent Document 3: JP 2018 070332 A
Patent Document 4: US 6 096 395 A
Patent Document 5: US 3 691 113 A

SUMMARY OF THE INVENTION

PROBLEMS TO BE SOLVED BY THE INVENTION

However, the material disclosed in Patent Document 1 has insufficient sound-absorbing ability on the high frequency side.
An epichlorohydrin rubber material using an epichlorohydrin-based polymer is widely used as materials of a fuel hose, an air hose, and a tube for an automobile, taking advantage of its heat resistance, oil resistance, ozone resistance, and the like. However, the epichlorohydrin rubber material hitherto has hardly been used as a foamed material in the fields of buildings, aircrafts, automobiles, railroad vehicles, computers, and the like.
Therefore, an object of the present invention is the use of a foamed material that has excellent sound-absorbing ability and of the composition for the foamed material for a sound-absorbing material of an electrical car.

SOLUTIONS TO THE PROBLEMS

The inventors have found that a foamed material made from a composition for a sound-absorbing material comprising an epichlorohydrin-based polymer (A), a foaming agent (B), and a crosslinking agent (C) exhibits special sound absorption characteristics. The present invention relates to the use of a composition for a sound-absorbing material of an electric automobile and of a foamed material for a sound-absorbing material of an electric automobile, wherein the foamed material is made from the composition as set out in the appended independent claims 1 and 5. Specific embodiments thereof are characterized in the dependent claims.

EFFECT OF THE INVENTION

The foamed material used according to the present invention is made from an epichlorohydrin-based polymer, exhibits special sound absorption characteristics, and has excellent sound-absorbing ability specially at several thousand Hz. In particular, the foamed material exhibits excellent sound absorption characteristics in use applications in frequencies exceeding 2000 Hz, for example, where the foamed material is used as a material for a motor used in an electric vehicle.

MODE FOR CARRYING OUT THE INVENTION

A composition for a sound-absorbing material used according to the present invention and a foamed material obtained by crosslinking the composition for a sound-absorbing material will be described below in detail. The composition for a sound-absorbing material comprises an epichlorohydrin-based polymer (A), a foaming agent (B), and a crosslinking agent (C), wherein the content of the foaming agent (B) is 0.1 parts by mass or more and 15 parts by mass or less relative to 100 parts by mass of the epichlorohydrin-based polymer (A), and the content of the crosslinking agent (C) is 0.1 parts by mass or more and 10 parts by mass or less relative to 100 parts by mass of the epichlorohydrin-based polymer (A).

The epichlorohydrin-based polymer (A) used in the composition for a sound-absorbing material is a ring-opening polymer having a structural unit (-CH$_2$-CH(CH$_2$Cl)-O-) derived from epichlorohydrin. Specifically, a ring-opening polymer of epichlorohydrin, and a ring-opening polymer of epichlorohydrin and a monomer that is copolymerizable with epichlorohydrin can be mentioned. Examples of the ring-opening polymer of epichlorohydrin and a monomer that is copolymerizable with epichlorohydrin include a ring-opening polymer of epichlorohydrin and an alkylene oxide, a ring-opening polymer of epichlorohydrin and a glycidyl, and a ring-opening polymer of epichlorohydrin, an alkylene oxide, and a glycidyl. The above-mentioned epichlorohydrin-based polymer can also be described as epichlorohydrin rubber.

Examples of the monomer that is copolymerizable with epichlorohydrin include alkylene oxides such as ethylene oxide, propylene oxide and n-butylene oxide, and glycidyls such as methyl glycidyl ether, ethyl glycidyl ether, n-glycidyl ether, allyl glycidyl ether, and phenyl glycidyl ether.

In the epichlorohydrin-based polymer (A), a structural unit derived from epichlorohydrin is preferably contained in an amount of 30 mol% or more, and more preferably 40 mol% or more, and may be contained in an amount of 70 mol% or more.

The epichlorohydrin-based polymer (A) has preferably a structural unit derived from an alkylene oxide, and more preferably a structural unit derived from ethylene oxide. In the epichlorohydrin-based polymer (A), a structural unit derived from an alkylene oxide is preferably contained in an amount of 3 mol% or more, and more preferably 5 mol% or more, and preferably in an amount of 60 mol% or less.

In the epichlorohydrin-based polymer (A), a structural unit derived from a glycidyl may be contained in an amount of 1 mol% or more, and may be contained in an amount of 2 mol% or more, and is preferably contained in an amount of 10 mol% or less, more preferably 8 mol% or less, and particularly preferably 5 mol% or less.

In the epichlorohydrin-based polymer (A), the total content of a structural unit derived from epichlorohydrin, a structural unit derived from an alkylene oxide, and a structural unit derived from a glycidyl is preferably 60 to 100 mol%, more preferably 80 mol% or more, and particularly preferably 90 mol% or more in 100 mol% of all the structural units.

In the present application, if the epichlorohydrin-based polymer (A) is composed of a single polymer, the molar ratios derived from the respective structural units in the epichlorohydrin-based polymer (A) are applied as they are, and if the epichlorohydrin-based polymer (A) is composed of a plurality of polymers, the molar ratios are calculated from the molar ratios of the respective polymers and the mass ratios of the respective polymers in the epichlorohydrin-based polymer (A).

Examples of a homopolymer or copolymer that can be used as the epichlorohydrin-based polymer (A) include an epichlorohydrin homopolymer, an epichlorohydrin-ethylene oxide copolymer, an epichlorohydrin-propylene oxide copolymer, an epichlorohydrin-ethylene oxide-allyl glycidyl ether terpolymer, and an epichlorohydrin-ethylene oxide-propylene oxide-allyl glycidyl ether quaterpolymer. These homopolymer and copolymers can be used alone or in combination of two or more.

The polymer composition of epichlorohydrin homopolymer, epichlorohydrin-ethylene oxide copolymer, or epichlorohydrin-ethylene oxide-allyl glycidyl ether terpolymer is gained through the chlorine content therein and the iodine value thereof.

The chlorine content is measured by potentiometric titration method according to the method described in JIS K7229. From the obtained chlorine content, the molar fraction of the structural unit derived from epichlorohydrin is calculated.

The iodine value is measured in accordance with JIS K6235. From the obtained iodine value, the molar fraction of the structural unit derived from allyl glycidyl ether is calculated.

The molar fraction of the structural unit derived from ethylene oxide is calculated from the molar fraction of the structural unit derived from epichlorohydrin and the molar fraction of the structural unit derived from allyl glycidyl ether.

The molecular weight of the epichlorohydrin-based polymer (A) is not particularly limited, and may be usually about 30 to 150 in terms of Mooney viscosity $ML_{1+4}(100°C)$.

Production of the epichlorohydrin-based polymer (A) may be performed by a solution polymerization method or a slurry polymerization method in a temperature range of -20°C to 100°C using a catalyst capable of catalyzing ring-opening polymerization of an oxirane compound. Examples of such a catalyst include a catalytic system obtained by reaction of an organoaluminum as a main material with water, an oxo acid compound of phosphorus or the like, or acetyl acetone; a catalytic system obtained by reaction of an organic zinc as a main material with water; and an organotin-phosphoric ester condensate catalytic system. For example, the organotin-phosphoric ester condensate catalytic system described in U.S. Patent No. 3,773,694 may be used to produce the epichlorohydrin-based polymer (A). In such a production method, it is preferable to copolymerize the above-mentioned components substantially randomly.

As the foaming agent (B) used in the composition for a sound-absorbing material used according to the present invention, it is preferable to use a known chemical foaming agent that utilizes a chemical change of a substance.

Chemical foaming agents include pyrolytic-type and reactive-type organic foaming agents and inorganic foaming agents.

Examples of the pyrolytic-type organic foaming agent include an azo compound, a nitroso compound, a hydrazine derivative, a semicarbazide compound, an azide compound, and a tetrazole compound. Examples of the reactive-type organic foaming agent include an isocyanate compound.

Examples of the pyrolytic-type inorganic foaming agent include a bicarbonate, a carbonate, a nitrite, and a hydride. Examples of the reactive-type inorganic foaming agent include a combination of sodium bicarbonate and an acid, a combination of hydrogen peroxide and yeast, and a combination of zinc powder and an acid. Among these, an organic foaming agent is preferable, a pyrolytic-type organic foaming agent is more preferable, and an azo compound, a nitroso compound, or a hydrazine derivative is particularly preferable.

Specific examples of the foaming agent (B) include azo compounds such as azodicarbonamide, azobisisobutyronitrile, barium azodicarboxylate, and diazoaminobenzene; nitroso compounds such as dinitrosopentamethylenetetramine, N,N'-dimethyl-N,N'-dinitrosoterephthalamide, and trinitrosotrimethylenetriamine; hydrazine derivatives such as 4,4'-oxybis(benzenesulfonyl hydrazide), and paratoluenesulfonylhydrazide; semicarbazide compounds such as p-toluenesulfonyl semicarbazide; bicarbonates such as sodium hydrogen carbonate and ammonium hydrogen carbonate; and carbonates such as ammonium carbonate. These foaming agents may be used alone or in combination of two or more.

In the composition for a sound-absorbing material used according to the present invention, the content of the foaming agent (B) is 0.1 parts by mass or more and 15 parts by mass or less relative to 100 parts by mass of the epichlorohydrin-based polymer (A). The lower limit is preferably 0.5 parts by mass or more, and the upper limit is preferably 10 parts by mass or less, and may be 7 parts by mass or less.

As the crosslinking agent (C) used in the composition for a sound-absorbing material used according to the present invention, a dechlorination crosslinking agent, which is a crosslinking agent that utilizes the reactivity of a chlorine atom, and a crosslinking agent that utilizes the reactivity of a side chain double bond can be mentioned. Examples of the dechlorination crosslinking agent include a polyamine-based crosslinking agent, a thiourea-based crosslinking agent, a thiadiazol-based crosslinking agent, a triazine-based crosslinking agent, a quinoxaline-based crosslinking agent, and a bisphenol-based crosslinking agent. Examples of the crosslinking agent that utilizes the reactivity of a side chain double bond include an organic peroxide-based crosslinking agent, sulfur, a morpholine polysulfide-based crosslinking agent, and a thiuram polysulfide-based crosslinking agent. The crosslinking agent (C) is preferably a dechlorination crosslinking agent, which is a crosslinking agent that utilizes the reactivity of a chlorine atom, and more preferably a thiourea-based crosslinking agent, a triazine-based crosslinking agent, or a quinoxaline-based crosslinking agent from the viewpoint of the balance between foamability and sound absorption. These crosslinking agents may be used alone or in combination of two or more.

Examples of the polyamine-based crosslinking agent include ethylenediamine, hexamethylenediamine, diethylenetriamine, triethylenetetramine, hexamethylenetetramine, p-phenylenediamine, cumenediamine, N,N'-dicinnamylidene-1,6-hexanediamine, ethylenediamine carbamate, and hexamethylenediamine carbamate.

Examples of the thiourea-based crosslinking agent include 2-mercaptoimidazoline (that is, ethylene thiourea), 1,3-diethyl thiourea, 1,3-dibutyl thiourea, and trimethyl thiourea.

Examples of the thiadiazol-based crosslinking agent include 2,5-dimercapto-1,3,4-thiadiazole and 2-mercapto-1,3,4-thiadiazole-5-thiobenzoate.

Examples of the triazine-based crosslinking agent include 2,4,6-trimercapto-1,3,5-triazine, 2-hexylamino-4,6-dimercaptotriazine, 2-diethylamino-4,6-dimercaptotriazine, 2-cyclohexylamino-4,6-dimercaptotriazine, 2-dibutylamino-4,6-dimercaptotriazine, 2-anilino-4,6-dimercaptotriazine, and 2-phenylamino-4,6-dimercaptotriazine.

Examples of the quinoxaline-based crosslinking agent include a 2,3-dimercaptoquinoxaline, quinoxaline-2,3-dithiocarbonate, 6-methylquinoxaline-2,3-dithiocarbonate, and 5,8-dimethylquinoxaline-2,3-dithiocarbonate.

Examples of the bisphenol-based crosslinking agent include bisphenol AF and bisphenol S.

Examples of the organic peroxide-based crosslinking agent include tert-butyl hydroperoxide, p-menthane hydroperoxide, dicumyl peroxide, tert-butyl peroxide, 1,3-bis(tert-butylperoxyisopropyl)benzene, 2,5-dimethyl-2,5-di(tert-butylperoxy)hexane, benzoyl peroxide, and tert-butyl peroxybenzoate.

Examples of the morpholine polysulfide-based crosslinking agent include morpholine disulfide.

Examples of the thiuram polysulfide-based crosslinking agent include tetramethylthiuram disulfide, tetraethylthiuram disulfide, tetrabutylthiuram disulfide, dipentamethylenethiuram tetrasulfide, and dipentamethylenethiuram hexasulfide.

In the composition for a sound-absorbing material used according to the present invention, the content of the crosslinking agent (C) is 0.1 parts by mass or more and 10 parts by mass or less relative to 100 parts by mass of the epichlorohydrin-based polymer (A). The lower limit is preferably 0.3 parts by mass or more, and the upper limit is preferably 5 parts by mass or less.

The composition for a sound-absorbing material of the present invention may further contain a compounding agent other than the above-mentioned components, as necessary, as long as the effects of the present invention are not impaired. Examples of the compounding agent include an acid acceptor, a lubricant, an antiaging agent, an antioxidant, an additive such as an ultraviolet absorber and a light stabilizer, a filler, a reinforcing agent, a plasticizer, a processing aid agent, a flame retardant, a crosslinking accelerator, a crosslinking retarder, a peptizer, and a foaming aid. Furthermore, blending of rubber, resin, and the like, which is commonly performed in the technical field, may be performed as long as characteristics of the present invention are not lost.

As the acid acceptor, a known acid acceptor (D) can be used depending on the crosslinking agent, and a metal compound and/or inorganic microporous crystal is used.

Examples of the metal compound include oxides, hydroxides, carbonates, carboxylates, silicates, borates, and phosphites of metals in Group II (Group 2 and Group 12) of the Periodic Table; and oxides, basic carbonates, basic carboxylates, basic phosphites, basic sulfites, and tribasic sulfates of lead-free metals in Group IV (Group 4 and Group 14) of the Periodic Table.

Specific examples of the metal compound include magnesium oxide, magnesium hydroxide, barium hydroxide, magnesium carbonate, barium carbonate, sodium carbonate, quicklime, slaked lime, calcium carbonate, calcium silicate, calcium stearate, zinc stearate, calcium phthalate, calcium phosphite, zinc white, tin oxide, tin stearate, and basic tin phosphite. Particularly preferred acid acceptor includes magnesium oxide, calcium carbonate, slaked lime, and quicklime.

The inorganic microporous crystal means a crystalline porous body, which is clearly distinguishable from an amorphous porous body such as silica gel and alumina. Examples of the inorganic microporous crystal include a zeolite, an alumina phosphate type molecular sieve, a layered silicate, a hydrotalcite, and an alkali metal titanate. Particularly preferred acid acceptor includes a hydrotalcite.

Examples of the zeolite include various kinds of zeolite such as a natural zeolite, a synthetic zeolite of type A, X, and Y, a sodalite, a natural or synthetic mordenite, and a ZSM-5, and a metal substitute thereof. The zeolite may be used alone or in combination of two or more. A metal of the metal substitute is often sodium. The zeolite is preferably a zeolite having a large acid accepting capacity, more preferably type A zeolite.

The hydrotalcite is represented by the following general formula (1):

$$Mg_XZn_YAl_Z(OH)_{(2(X+Y)+3Z-2)}CO_3 \cdot wH_2O \qquad (1)$$

wherein X and Y each represent numbers of 0 to 10 having a relationship of X + Y = 1 to 10, Z represents a number of 1 to 5, and w represents a number of 0 to 10, respectively.

Specific examples of the hydrotalcite include $Mg_{4.5}Al_2(OH)_{13}CO_3 \cdot 3.5H_2O$, $Mg_{4.5}Al_2(OH)_{13}CO_3$, $Mg_4Al_2(OH)_{12}CO_3 \cdot 3.5H_2O$, $Mg_5Al_2(OH)_{14}CO_3 \cdot 4H_2O$, $Mg_3Al_2(OH)_{10}CO_3 \cdot 1.7H_2O$, $Mg_3ZnAl_2(OH)_{12}CO_3 \cdot 3.5H_2O$, $Mg_3ZnAl_2(OH)_{12}CO_3$, and $Mg_{4.3}Al_2(OH)_{12.6}CO_3 \cdot 3.5H_2O$.

In the composition for a sound-absorbing material used according to the present invention, the content of the acid acceptor (D) is preferably 0.2 to 50 parts by mass, and particularly preferably 1 to 20 parts by mass, relative to 100 parts by mass of the epichlorohydrin-based polymer (A). When the content of the acid acceptor (D) is within the above range, the rigidity of the crosslinked foamed material can be controlled more appropriately, resulting in physical properties better than normally expected as a crosslinked foamed material.

The crosslinking accelerator is not particularly limited as long as it is a known crosslinking accelerator. Examples of the crosslinking accelerator include sulfur, a thiuram-based crosslinking accelerator, a thiazole-based crosslinking accelerator, a morpholine sulfide-based crosslinking accelerator, a sulfenamide-based crosslinking accelerator, a guanidine-based crosslinking accelerator, a thiourea-based crosslinking accelerator, an aldehyde-ammonia-based crosslinking accelerator, a dithiocarbamate-based crosslinking accelerator, a xanthogenate-based crosslinking accelerator, a fatty acid alkali metal salt-based crosslinking accelerator, a 1,8-diazabicyclo(5,4,0)undecene-7 (hereinafter abbreviated as DBU) salt-based crosslinking accelerator, and a 1,5-diazabicyclo(4,3,0)nonene-5 (hereinafter abbreviated as DBN) salt-based crosslinking accelerator.

Examples of the thiuram-based crosslinking accelerator include tetramethylthiuram disulfide, tetraethylthiuram disulfide, tetrabutylthiuram disulfide, dipentamethylenethiuram tetrasulfide, dipentamethylenethiuram hexasulfide, and tetramethylthiuram monosulfide.

Examples of the thiazole-based crosslinking accelerator include mercaptobenzothiazole, dibenzothiazyl disulfide, various metal salts of 2-mercaptobenzothiazole, cyclohexylamine salt of 2-mercaptobenzothiazole, 2-(N,N-diethylthiocarbamoylthio)benzothiazole, 2-(4'-morpholinodithio)benzothiazole, and di-2-benzothiazolyl disulfide.

Examples of the morpholine sulfide-based crosslinking accelerator include morpholine disulfide.

Examples of the sulfenamide-based crosslinking accelerator include N-cyclohexyl-2-benzothiazylsulfenamide, N,N-dicyclohexyl-2-benzothiazylsulfenamide, N-oxydiethylene-2-benzothiazylsulfenamide, N-tert-butyl-2-benzothiazylsulfenamide, and N-tert-butyl-di(2-benzothiazole)sulfenimide.

Examples of the guanidine-based crosslinking accelerator include diphenylguanidine and ditolylguanidine.

Examples of the thiourea-based crosslinking accelerator include ethylenethiourea, diethylenethiourea, dibutylthiourea, dilaurylthiourea, trimethylthiourea and diphenylthiourea.

Examples of the aldehyde-ammonia-based crosslinking accelerator include hexamethylenetetramine.

Examples of the dithiocarbamate-based crosslinking accelerator include zinc dimethyldithiocarbamate, zinc diethyldithiocarbamate, and zinc N-pentamethylenedithiocarbamate.

Examples of the xanthogenate-based crosslinking accelerator include zinc isopropylxanthogenate and zinc butylxanthogenate.

Examples of the fatty acid alkali metal salt-based crosslinking accelerator include sodium stearate and potassium stearate.

Examples of the DBU salt-based crosslinking accelerator include DBU-carbonates, DBU-stearates, DBU-2-ethylhexylates, DBU-benzoates, DBU-salicylates, DBU-3-hydroxy-2-naphthoates, DBU-phenol resin salts, DBU-2-mercaptobenzothiazole salts, and DBU-2-mercaptobenzimidazole salts.

Examples of the DBN salt-based crosslinking accelerator include DBN-carbonates, DBN-stearates, DBN-2-ethylhexylates, DBN-benzoates, DBN-salicylates, DBN-3-hydroxy-2-naphthoates, DBN-phenol resin salts, DBN-2-mercaptobenzothiazole salts, and DBN-2-mercaptobenzimidazole salts.

In the composition for a sound-absorbing material used according to the present invention, the content of the crosslinking accelerator is preferably 0.1 to 15 parts by mass, more preferably 0.1 to 10 parts by mass, and particularly preferably 0.1 to 5 parts by mass, relative to 100 parts by mass of the epichlorohydrin-based polymer (A).

Specific examples of the lubricant include paraffins and hydrocarbon resins such as paraffin wax and a hydrocarbon wax; fatty acids such as stearic acid and palmitic acid; fatty acid amides such as stearamide and oleyl amide; fatty acid esters such as n-butyl stearate; sorbitan fatty acid esters; and fatty alcohols. These lubricants may be used alone or in combination of two or more.

Examples of the antiaging agent include known antiaging agents such as an amine-based antiaging agent, a phenol-based antiaging agent, a benzimidazole-based antiaging agent, a dithiocarbamate-based antiaging agent, a thiourea-based antiaging agent, an organic thioic acid-based antiaging agent, and a phosphorus acid-based antiaging agent. These antiaging agents may be used alone or in combination of two or more. The antiaging agent is preferably an amine-based antiaging agent, a phenol-based antiaging agent, a benzimidazole-based antiaging agent, or a dithiocarbamate-based antiaging agent, and more preferably a dithiocarbamate-based antiaging agent.

Examples of the crosslinking retarder include N-cyclohexylthiophthalimide, o,o'-dibenzamidediphenyl disulfide, an organic zinc compound such as zinc stearate, and acidic silica. These crosslinking retarders may be used alone or in combination of two or more.

In the composition for a sound-absorbing material used according to the present invention, the content of the crosslinking retarder is preferably 0 to 5 parts by mass, more preferably 0 to 1 part by mass, and particularly preferably 0 to 0.3 parts by mass, relative to 100 parts by mass of the epichlorohydrin-based polymer (A). When the content of the crosslinking retarder is within the above range, the crosslinking characteristics of the foamed material can be controlled more appropriately, resulting in physical properties better than normally expected as a crosslinked foamed material.

Examples of the plasticizer include a phthalic acid derivative such as dioctyl phthalate (bis(2-ethylhexyl) phthalate), an adipic acid derivative such as dibutyldiglycol adipate and di(butoxyethoxy) ethyl adipate, a sebacic acid derivative such as dioctyl sebacate, and a trimellitic acid derivative such as trioctyl trimellitate. These plasticizers may be used alone or in combination of two or more. The plasticizer is preferably a phthalic acid derivative.

In the composition for a sound-absorbing material used according to the present invention, the content of the plasticizer is preferably 0.1 to 50 parts by mass, and particularly preferably 1 to 25 parts by mass, relative to 100 parts by mass of the epichlorohydrin-based polymer (A). When the content of the plasticizer is within the above range, the flexibility of the foamed material becomes more appropriate, resulting in physical properties better than normally expected as a crosslinked foamed material.

As the peptizer, an aromatic mercaptan compound, an aromatic disulfide compound, an aromatic mercaptan metal compound, or a mixed compound thereof can be used. Typical examples of the peptizer include o,o'-dibenzamidediphenyl disulfide.

In the composition for a sound-absorbing material used according to the present invention, when rubber and/or resin is blended, examples of the rubber include natural rubber (NR), butadiene rubber (BR), 1,2-polybutadiene (VBR), chloroprene rubber (CR), butyl rubber (IIR), styrene butadiene rubber (SBR), acrylonitrile butadiene rubber (NBR), hydrogenated acrylonitrile butadiene rubber (H-NBR), ethylene propylene diene rubber (EPDM), chlorosulfonated polyethylene (CSM), acrylic rubber (ACM), silicone rubber (VMQ), fluororubber (FKM), and urethane rubber (AU). Examples of the resin include polyester resin such as polyethylene terephthalate, polycarbonate resin, polystyrene resin, ABS (acrylonitrile-butadiene-styrene) resin, AS (acrylonitrile-styrene) resin, polyamide resin, polyphenylene ether resin, polyethylene resin, polypropylene resin, polyvinyl chloride resin, polyoxymethylene resin, and acrylic resin. These rubbers and resins may be used alone or in combination of two or more.

In the composition for a sound-absorbing material used according to the present invention, the content of the rubber and/or resin is preferably 50 parts by mass or less, more preferably 30 parts by mass or less, further preferably 10 parts by mass or less, and particularly preferably 5 parts by mass or less, relative to 100 parts by mass of the epichlorohydrin-based polymer (A), and may be 0 parts by mass.

In the composition for a sound-absorbing material used according to the present invention, it is preferable to use a foaming aid together with the foaming agent. The concurrent use of the foaming aid and the foaming agent contributes to the lowering a temperature of decomposition of the foaming agent, accelerating the decomposition, and homogenizing bubbles. As the foaming aid, an organic acid, an inorganic acid, an inorganic salt, a metal soap, urea, a urea derivative, and the like can be used. Examples of the organic acid include salicylic acid, phthalic acid, stearic acid, oxalic acid, succinic acid, and adipic acid. Examples of the inorganic acid include a nitric acid. Examples of the inorganic salt include zinc oxide, zinc nitrate, lead phthalate, lead carbonate, trichloride phosphate, and tribasic lead sulfate. Examples of the metal soap include zinc stearate and lead stearate. Examples of the urea include CELLPASTE 101 manufactured by Eiwa Chemical Ind. Co., Ltd. Examples of the urea derivative include CELLTON NP manufactured by Sankyo Kasei Co., Ltd. and CELLPASTE K5 manufactured by Eiwa Chemical Ind. Co., Ltd. The urea and/or urea derivative is particularly preferable as the foaming aid. A preferable combination of the foaming agent and the foaming aid is a combination of azodicarbonamide and/or dinitrosopentamethylenetetramine and urea and/or a urea derivative.

In the composition for a sound-absorbing material used according to the present invention, the content of the foaming aid is preferably 0.1 parts by mass or more and 15 parts by mass or less relative to 100 parts by mass of the epichlorohydrin-based polymer (A). The lower limit is particularly preferably 0.5 parts by mass or more, and the upper limit is particularly preferably 10 parts by mass or less. The ratio of the content of the foaming aid to the content of the foaming agent (foaming aid/foaming agent) is preferably 0.1 to 3, more preferably 0.3 to 2.5, and further preferably 0.6 to 2.

Into the composition for a sound-absorbing material used according to the present invention, it is preferable to blend a reinforcing agent. Examples of the reinforcing agent include carbon blacks, such as furnace black, acetylene black, thermal black, channel black, and graphite. More specifically, SAF (ASTM code: N110), ISAF (ASTM code: N220), HAF (ASTM code: N330), EPC (ASTM code: N300), XCF (ASTM code: N400), FEF (ASTM code: N550), GPF (ASTM code: N600), HMF (ASTM code: N683), SRF (ASTM code: N770), FT (ASTM code: N880), and MT (ASTM code: N990) can be exemplified. These carbon blacks may be used alone or in combination of two or more.

Preferred as the carbon black is a carbon black having a nitrogen adsorption specific surface area (N2SA) of 5 $m^2/g$ or more, more preferably 7 $m^2/g$ or more, and particularly preferably 10 $m^2/g$ or more. The upper limit of the nitrogen adsorption specific surface area is preferably 180 $m^2/g$ or less from the viewpoint of easy availability.

Preferred as the carbon black is a carbon black having a dibutyl phthalate (DBP) oil absorption of 15 ml/100 g, more preferably 20 ml/100 g or more, and particularly preferably 30 ml/100 g or more. The upper limit of the DBP oil absorption is preferably 175 ml/100 g or less, and more preferably 170 ml/100 g or less from the viewpoint of easy availability.

Preferred as the carbon black is a carbon black having a particle size of about 10 to 60 nm, for example, SAF, ISAF, HAF, EPC, XCF, FEF, GPF and the like. Use of a carbon black having a small particle size allows a foamed state of a foam to keep more suitably, resulting in physical properties better than normally expected as a crosslinked foamed material.

In the composition for a sound-absorbing material used according to the present invention, the content of the carbon black is preferably 5 parts by mass or more, more preferably 10 parts by mass or more, further preferably 30 parts by mass or more, and may be 55 parts by mass or more, relative to 100 parts by mass of the epichlorohydrin-based polymer (A). Furthermore, the content of the carbon black is preferably 80 parts by mass or less, and more preferably 70 parts by mass or less relative to 100 parts by mass of the epichlorohydrin-based polymer (A).

As the filler, calcium carbonate, kaolin, talc, mica, bentonite, clay, sericite, glass fiber, carbon fiber, aramid fiber, nylon fiber, acrylic fiber, glass powder, glass balloon, shirasu balloon, coal powder, acrylic resin powder, phenol resin powder, metal powder, ceramic powder, zeolite, slate powder, or the like can be used.

In the composition for a sound-absorbing material used according to the present invention, the content of the filler is preferably 5 parts by mass or more, and more preferably 10 parts by mass or more, and is preferably 60 parts by mass or less, and more preferably 30 parts by mass or less, relative to 100 parts by mass of the epichlorohydrin-based polymer (A).

For producing the composition for a sound-absorbing material, any mixing means that has been hitherto used in the field of polymer processing is usable. Examples of the mixing means include a mixing roll, a Bunbury mixer, and various kneaders.

The foamed material used according to the present invention is made from the composition for a sound-absorbing material used according to the present invention. Specifically, the foamed material used according to the present invention is obtained by crosslinking the composition for a sound-absorbing material, and thus can also be described as a crosslinked material or a crosslinked foamed material.

The foamed material used according to the present invention is usually obtained by heating the composition for a sound-absorbing material to a temperature of 100 to 200°C. The crosslinking time varies depending on the temperature, and is usually in the range of 0.5 to 300 minutes. As a method of crosslinking and molding, any method including compression molding or injection molding using a mold, and heating using a steam can, an air bath, infrared rays, or microwaves can be used.

In the present invention, the composition for a sound-absorbing material is crosslinked and molded, and the reaction of the foaming agent proceeds (by crosslinking and foaming), whereby a foamed material molded into a desired shape is obtained.

If foaming and crosslinking cannot be performed under the same conditions, the composition for a sound-absorbing material is foamed by a predetermined method to prepare a foam, and the prepared foam is crosslinked and molded to obtain a foamed material molded into a desired shape.

The specific gravity after foaming of the foamed material is preferably 0.8 $g/cm^3$ or less, more preferably 0.3 $g/cm^3$ or less, further preferably 0.2 $g/cm^3$ or less, particularly preferably 0.16 $g/cm^3$ or less, and most preferably 0.150 $g/cm^3$ or less, and is preferably 0.05 $g/cm^3$ or more, more preferably 0.08 $g/cm^3$ or more, further preferably 0.09 $g/cm^3$ or more, and particularly preferably 0.1 $g/cm^3$ or more. When the specific gravity after foaming is within the above range, physical properties better than normally expected as a crosslinked foamed material can be obtained. The specific gravity after foaming of the foamed material can be determined in such a manner that the foamed material is cut into 30 mm squares with scissors, and "DENSIMETER" manufactured by Toyo Seiki Seisaku-sho, Ltd. is used to measure a specific gravity of the cut foamed material.

The foam cell area of the foamed material is preferably 0.02 $mm^2$ or more, more preferably 0.025 $mm^2$ or more, further preferably 0.03 $mm^2$ or more, and particularly preferably 0.035 $mm^2$ or more, and is preferably 0.1 $mm^2$ or less, further preferably 0.09 $mm^2$ or less, and particularly preferably 0.07 $mm^2$ or less. When the foam cell area is within the above range, physical properties better than normally expected as a crosslinked foamed material can be obtained. For the foam cell area of the foamed material, a microscope manufacture by KEYENCE is used to measure an area of a foam cell (cell by cell) at a viewing angle of 0.8 mm × 0.8 mm, and an average value thereof is calculated. An average of the average value of 10 areas measured at 10 measurement points is taken as a foam cell area.

The foamed material used according to the present invention has a good sound absorption coefficient in a high frequency band. The sound absorption coefficient of the foamed material at 2000 Hz is preferably 13% or more, and the upper limit thereof is not particularly limited, but may be 80% or less. The sound absorption coefficient of the foamed material at 4000 Hz is preferably 30% or more, more preferably 40% or more, and further preferably 50% or more. The upper limit thereof is not particularly limited, but may be 80% or less. The sound absorption coefficient of the foamed material can be measured in accordance with JIS A1405-2: 2007.

The foamed material used according to the present invention is suitably used as a foamed material with excellent sound absorption characteristics specially at several thousand Hz, and thus is preferably used for a motor cover and an inverter cover.

This application claims benefit of priority based on Japanese Patent Application No. 2018-141253 filed on July 27, 2018.

EXAMPLES

Hereinbelow, the present invention will be more specifically described in examples and comparative examples, but the present invention is not limited to these descriptions.

(Example 1, Comparative Examples 1 and 2)

Materials shown in Table 1 described below were kneaded with a kneader and an open roll to prepare an unvulcanized rubber sheet. The resultant unvulcanized rubber sheet was preliminarily shaped into a 10 mm thick 100 mm square sheet. Next, 9.5 mm thick 80 mm square spacer was prepared, and the sheet was put into the spacer. Then, the sheet was subjected to primary vulcanization and primary foaming with a press at 140°C for 15 minutes by a two-stage foaming method. The sheet was taken out from the press, put into 5 mm thick 200 mm square spacer, and subjected to secondary vulcanization and secondary foaming with a press at 150°C for 15 minutes. The resultant sponge sheet was cut with a slicer to obtain a foamed material, for a sound-absorbing material, of which one surface bore a skin layer. An expansion ratio is a value determined from the following formula. Table 1 shows the expansion ratio from the unvulcanized rubber sheet to the foamed material for a sound-absorbing material.

Expansion ratio = Specific gravity before foaming/Specific gravity after foaming

The foamed material of each of Example and Comparative Examples was cut into 30 mm squares with scissors, and "DENSIMETER" manufactured by Toyo Seiki Seisaku-sho, Ltd. was used to measure a specific gravity of the cut foamed material, whereby the "specific gravity after foaming" was determined. The measurement results are shown in Table 2.

A microscope manufacture by KEYENCE was used to measure an area of a foam cell (cell by cell) at a viewing angle of 0.8 mm × 0.8 mm, and an average value thereof was calculated. An average of the average value of 10 areas measured at 10 measurement points was taken as a foam cell area. The measurement results are shown in Table 2.

The sound absorption coefficient of the foamed material of each of Example and Comparative Examples was measured in accordance with JIS A1405-2: 2007 "Acoustics-Determination of sound absorption coefficient and impedance in impedance tubes-Part 2: Transfer-function method", using Sound absorption coefficient measurement system Model 9302 (manufactured by Rion Co., Ltd.) with a specimen thickness of 5 mm. The measurement results are shown in Table 3.

The blending materials used in Example and Comparative Examples in Table 1 are shown below.

*1: "Epichlorohydrin-based polymer: EPICHLOMER C", manufactured by Osaka Soda Co., Ltd., (a structural unit derived from epichlorohydrin: 50 mol%, a structural unit derived from ethylene oxide: 50 mol%)
*2: "Acrylonitrile-butadiene copolymer: N230S" manufactured by JSR Corporation
*3: "Chloroprene polymer: Denka Chloroprene M-40" manufactured by Denka Co., Ltd.
*4: "SEAST SO" manufactured by Tokai Carbon Co., Ltd.
*5: "BURGESS No. 30" manufactured by Burgess Pigment Company
*6: "DOP" manufactured by Daihachi Chemical Industry Co., Ltd.

[Table 1]

| materials (unit : part(s) by mass) | | Example 1 | Comparative Example 1 | Comparative Example 2 |
|---|---|---|---|---|
| | epichlorohydrin-based polymer *1 | 100 | | |
| | acrylonitrile-butadiene copolymer *2 | | 100 | |
| | chloroprene polymer *3 | | | 100 |
| | FEF carbon black *4 (reinforcing agent) | 60 | 60 | 60 |
| | calcined clay *5 (filler) | 20 | 20 | 20 |
| | phthalic acid-based plasticizer *6 | 20 | 20 | 20 |
| | magnesium oxide (acid acceptor) | 6 | | 4 |
| | zinc oxide (acid acceptor)[1] | | 5 | 5 |
| | sulfur (crosslinking accelerator)[2] | 0.3 | 0.5 | |
| | ethylene thiourea (crosslinking agent) | 1 | | 0.5 |
| | N-cyclohexyl-2-benzothiazolesulfenamide (crosslinking accelerator) | | 1 | |
| | tetramethylthiuram disulfide (crosslinking accelerator) | | 2 | |
| | dinitrosopentamethylenetetramine (foaming agent) | 5 | 5 | 5 |
| | urea (foaming aid) | 5 | 5 | 5 |
| expansion ratio (unit : times) | | 10.88 | 8.62 | 10.68 |

1) Zinc oxide of Comparative Example 1 was used as a crosslinking accelerator aid.

2) Sulfur of Comparative Example 1 was used as a crosslinking agent.

[Table 2]

| | Example 1 | Comparative Example 1 | Com parative Example 2 |
|---|---|---|---|
| specific gravity after foaming (g/cm$^3$) | 0.146 | 0.172 | 0.154 |
| foam cell area (mm$^2$) | 0.04 | 0.02 | 0.01 |

[Table 3]

| | Example 1 | Comparative Example 1 | Com parative Example 2 |
|---|---|---|---|
| sound absorption coefficient at 2000 Hz (%) | 13 | 12 | 8 |
| sound absorption coefficient at 4000 Hz (%) | 65 | 25 | 15 |

As shown in Table 3, the foamed material made from the composition for a sound-absorbing material used according to the present invention exhibited a good result in the sound absorption coefficient at 2000 Hz and exhibited a particularly good result in the sound absorption coefficient in a high frequency band exceeding 2000 Hz, as compared with the foamed materials using NBR (Comparative Example 1) and CR (Comparative Example 2), which are conventionally used.

INDUSTRIAL APPLICABILITY

According to the present invention, it is possible to provide a foamed material using an epichlorohydrin-based polymer and having excellent sound absorption characteristics. Therefore, due to having excellent sound absorption characteristics in a high frequency band, the composition for a sound-absorbing material used according to the present invention and the foamed material used according to the present invention can be suitably used for a sound-absorbing material having excellent absorption of a motor noise of an electric automobile.

## Claims

1. Use of a composition for a sound-absorbing material of an electric automobile, comprising an epichlorohydrin-based polymer (A), a foaming agent (B), and a crosslinking agent (C),
wherein the content of the foaming agent (B) is 0.1 parts by mass or more and 15 parts by mass or less relative to 100 parts by mass of the epichlorohydrin-based polymer (A), and the content of the crosslinking agent (C) is 0.1 parts by mass or more and 10 parts by mass or less relative to 100 parts by mass of the epichlorohydrin-based polymer (A).

2. Use of the composition according to claim 1, wherein the foaming agent (B) is a chemical foaming agent.

3. Use of the composition according to claim 1 or 2, wherein the crosslinking agent (C) is a dechlorination crosslinking agent.

4. Use of the composition according to any one of claims 1 to 3, wherein the crosslinking agent (C) is a triazine-based crosslinking agent, a thiourea-based crosslinking agent, or a quinoxaline-based crosslinking agent.

5. Use of a foamed material for a sound-absorbing material of an electric automobile, wherein the foamed material is made from the composition as defined in any one of claims 1 to 4.

6. Use of the foamed material according to claim 5, wherein the foamed material has a specific gravity of 0.05 $g/cm^3$ or more and 0.2 $g/cm^3$ or less, wherein the specific gravity is determined in that the foamed material is cut into 30 mm squares with scissors to measure the specific gravity of the cut foamed material by "DENSIMETER" manufactured by Toyo Seiki Seisaku-sho, Ltd..

7. Use of the foamed material according to claim 5 or 6, wherein a foam cell area of the foamed material is on average 0.025 $mm^2$ or more and 0.1 $mm^2$ or less, as determined by the method described in the description.

## Patentansprüche

1. Verwendung einer Zusammensetzung für ein schallabsorbierendes Material eines Elektrofahrzeugs, umfassend ein Polymer (A) auf Epichlorhydrinbasis, ein Schaummittel (B) und ein Vernetzungsmittel (C),
wobei der Gehalt des Schaummittels (B) 0,1 Massenteile oder mehr und 15 Massenteile oder weniger, bezogen auf 100 Massenteile des Polymers (A) auf Epichlorhydrinbasis, beträgt und der Gehalt an Vernetzungsmittel (C) 0,1 Massenteile oder mehr und 10 Massenteile oder weniger, bezogen auf 100 Massenteile des Polymers (A), beträgt.

2. Verwendung der Zusammensetzung nach Anspruch 1, wobei das Schaummittel (B) ein chemisches Schaummittel ist.

3. Verwendung der Zusammensetzung nach Anspruch 1 oder 2, wobei das Vernetzungsmittel (C) ein Dechlorierungsvernetzungsmittel ist.

4. Verwendung der Zusammensetzung nach einem der Ansprüche 1 bis 3, wobei das Vernetzungsmittel (C) ein Vernetzungsmittel auf Triazinbasis, ein Vernetzungsmittel auf Thioharnstoffbasis oder ein Vernetzungsmittel auf Chinoxalinbasis ist.

5. Verwendung eines Schaumstoffs als schallabsorbierendes Material für ein Elektrofahrzeug, wobei der Schaumstoff aus der in einem der Ansprüche 1 bis 4 definierten Zusammensetzung hergestellt ist.

6. Verwendung des Schaumstoffs nach Anspruch 5, wobei der Schaumstoff ein spezifisches Gewicht von 0,05 $g/cm^3$ oder mehr und 0,2 $g/cm^3$ oder weniger aufweist, wobei das spezifische Gewicht dadurch bestimmt wird, dass der Schaumstoff mit einer Schere in 30 mm große Quadrate geschnitten wird, um das spezifische Gewicht des geschnittenen Schaumstoffs mit einem von Toyo Seiki Seisaku-sho, Ltd. hergestellten "DENSIMETER" gemessen wird.

7. Verwendung des Schaumstoffs nach Anspruch 5 oder 6, wobei eine Schaumstoffzellenfläche des Schaumstoffs im Durchschnitt 0,025 mm$^2$ oder mehr und 0,1 mm$^2$ oder weniger beträgt, wie durch das in der Beschreibung beschriebene Verfahren bestimmt.

**Revendications**

1. Utilisation d'une composition pour un matériau absorbant acoustique d'une automobile électrique, comprenant un polymère à base d'épichlorohydrine (A), un agent moussant (B) et un agent de réticulation (C),
dans laquelle la teneur en l'agent moussant (B) est de 0,1 partie en masse ou plus et 15 parties en masse ou moins par rapport à 100 parties en masse du polymère à base d'épichlorohydrine (A), et la teneur en l'agent de réticulation (C) est de 0,1 partie en masse ou plus et 10 parties en masse ou moins par rapport à 100 parties en masse du polymère à base d'épichlorohydrine (A).

2. Utilisation de la composition selon la revendication 1, dans laquelle l'agent moussant (B) est un agent moussant chimique.

3. Utilisation de la composition selon la revendication 1 ou 2, dans laquelle l'agent de réticulation (C) est un agent de réticulation par déchloration.

4. Utilisation de la composition selon l'une quelconque des revendications 1 à 3, dans laquelle l'agent de réticulation (C) est un agent de réticulation à base de triazine, un agent de réticulation à base de thiourée ou un agent de réticulation à base de quinoxaline.

5. Utilisation d'un matériau expansé pour un matériau absorbant acoustique d'une automobile électrique, dans laquelle le matériau expansé est réalisé à partir de la composition telle que définie dans l'une quelconque des revendications 1 à 4.

6. Utilisation du matériau expansé selon la revendication 5, dans laquelle le matériau expansé a une gravité spécifique de 0,05 g/cm$^3$ ou plus et 0,2 g/cm$^3$ ou moins, dans laquelle la gravité spécifique est déterminée en ce que le matériau expansé est découpé en carrés de 30 mm avec des ciseaux pour mesurer la gravité spécifique du matériau expansé découpé par « DENSIMETER » fabriqué par Toyo Seiki Seisaku-sho, Ltd.

7. Utilisation du matériau expansé selon la revendication 5 ou 6, dans laquelle une aire d'alvéole du matériau expansé est en moyenne de 0,025 mm$^2$ ou plus et 0,1 mm$^2$ ou moins, telle que déterminée par le procédé décrit dans la description.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H01139634 A
- JP 2004306660 A
- JP 2018070332 A
- US 6096395 A
- US 3691113 A
- US 3773694 A
- JP 2018141253 A